# EUROPEAN PATENT SPECIFICATION

(11) **EP 2 794 697 B1**
(45) Date of publication and mention of the grant of the patent: **09.03.2016**
(21) Application number: 12809064.4
(22) Date of filing: 17.12.2012
(51) Int. Cl.: C08F 220/06, C08L 33/02

(54) **THERMOFORMABLE CROSSLINKED ACRYLIC**
THERMOFORMBARES VERNETZTES ACRYL
ACRYLIQUE RÉTICULÉ THERMOFORMABLE

(30) Priority: 22.12.2011 US 201161579154 P
(43) Date of publication of application: 29.10.2014
(73) Proprietor: 3M Innovative Properties Company, Saint Paul, Minnesota 55133-3427 (US)
(72) Inventor: WAID, Robert D., Saint Paul, Minnesota 55133-3427 (US); JENNEN, Jay M., Saint Paul, Minnesota 55133-3427 (US)
(74) Representative: Herzog, Fiesser & Partner Patentanwälte PartG mbB
(86) International application number: PCT/US2012/070033
(87) International publication number: WO 2013/096170

(56) References cited:
- GB-A- 2 070 624

## Description

### FIELD

The present disclosure relates to thermoformable acrylic compositions. The compositions contain ionic crosslinkers that result in acrylics that include thermally-reversible crosslinks.

### SUMMARY

In one aspect, the present disclosure provides a thermally reversible admixture comprising (a) an ionically crosslinked polymer matrix comprising at least one (meth)acrylic polymer, a first mole fraction of an acid functional polymer, a second mole fraction of a moiety capable of forming an ionic crosslink with the acid functional polymer, wherein the first mole fraction and the second mole fraction are based on the total number of moles of repeat units in the polymer matrix; and (b) 2 to 50 weight percent microspheres. In some embodiments, the at least one (meth)acrylic polymer comprises a first (meth)acrylic polymer derived from the acid functional polymer and the moiety capable of forming an ionic crosslink with the acid functional polymer. In some embodiments, the at least one (meth)acrylic polymer comprises a first (meth)acrylic polymer comprising the acid functional polymer and a second polymer comprising the moiety capable of forming an ionic crosslink with the acid functional polymer.

In some embodiments, the second polymer is an (meth)acrylic polymer. In some embodiments, the moiety capable of forming an ionic crosslink with the acid functional polymer is selected from the group consisting of polymers derived from non-nucleophilic amine-functional monomers. In some embodiments, the reactive monomer is selected from the group consisting of substituted aziridines.

In some embodiments, the acidic functional monomer is selected from the group consisting of ethylenically unsaturated carboxylic acids. In some embodiments, the acidic functional polymer comprises a mixture of (meth)acrylic acid monomers and (meth)acrylic ester monomers. In some embodiments, the (meth)acrylic ester monomers are alkyl(meth)acrylates having 2 to 14 carbon atoms in the alkyl group.

In some embodiments, the presently disclosed admixture comprises at least 1.5 percent by weight of microspheres. In some embodiments, the microspheres are glass microspheres. In some embodiments, the microspheres are expandable polymeric microspheres.

In another aspect, the present disclosure provides a formable composite comprising a first skin layer bonded to a core material comprising any of the aforementioned admixtures. In some embodiments, the formable composite further comprises a second skin layer bonded to the core material, wherein the first and second skin layers are separated by the core material. In some embodiments, the first skin layer comprises a metal. In some embodiments, the first skin layer comprises a thermoplastic polymer.

In another aspect, the presently disclosure provides a formed composite comprising any of the previously disclosed formable composites. In some embodiments, the formed composite is cold formed. In some embodiments, the formed composite is thermoformed.

The above summary of the present disclosure is not intended to describe each embodiment of the present invention. The details of one or more embodiments of the invention are also set forth in the description below. Other features, objects, and advantages of the invention will be apparent from the description and from the claims.

### DETAILED DESCRIPTION

Pressure sensitive adhesive (PSA) foam tapes have been used for attachment. Typically, the foam tape is cut into strips or die cut shapes and adhered to the parts to be attached. This approach works well when the bonding surfaces of the parts are essentially planar, e.g., in the bonding of body side moldings to vehicle doors. However, placement of such tapes onto surfaces having a complex shape or around corners without wrinkling or air entrapment is difficult. Thick foam tapes are not used for complete-area-bonding of complex shapes due to these challenges in obtaining gapless coverage over a curved surface when applying strips or sheets of a foam tape.

When bonding parts with non-planar surfaces, e.g., curved and compound curved surfaces, strips or die cut squares of the foam tape are applied to a portion of the joined surfaces. However, such a process is time-consuming and the surface area suitable for the foam tape may not provide a sufficient bond. In addition, the use of discrete, distributed, die cut shapes to join the parts together results in gaps in the tape coverage that allow ingress of moisture, dust, and noise.

Generally, total bond strength and sealing (e.g., the minimization or elimination of gaps) could be improved if complex shapes could be joined together by a continuous layer of foam tape with contours matched to the surfaces of the parts to be joined. The present inventor has discovered that total area coverage of a foam tape to a complex shaped article can be achieved by combining a flat piece of a thermoformable foam tape derived from the presently disclosed thermally reversible admixture and a substantially planar part. Subsequently, the part and the foam tape can be formed into the desired complex shape simultaneously, using heat and pressure to shape the composite construction, i.e., the foam tape and the part.

Generally, the thermally reversible admixture of the present disclosure includes at least one acid functional polymer, microspheres, and an ionic crosslinker. In some embodiments, two or more acid functional polymers may be used, e.g., a high molecular weight acrylic polymer and a low molecular weight acrylic polymer.

Suitable acid functional polymers include copolymers comprising the polymerization product of a monomer mixture comprising one or more (meth)acrylate esters and one or more acidic comonomers. Depending on the desired properties, other copolymerizable monomers may also be included in the monomer mixture.

As used herein, "(meth)acrylate" refers to one and/or both the acrylate ester and the methacrylate ester. Thus, for example, butyl (meth)acrylate refers to butyl acrylate and/or butyl methacrylate. In some embodiments, at least one (meth)acrylate ester is an alkyl(meth)acrylate. In some embodiments, the alkyl group of at least one alkyl(meth)acrylate contains, e.g., 2 to 14 carbon atoms. In some embodiments, the alkyl group of at least one alkyl(meth)acrylate contains 8 carbon atoms, e.g., isooctyl (meth)acrylate and 2-ethylhexyl (meth)acrylate.

In some embodiments, the acidic monomer component comprises one or more ethylenically unsaturated carboxylic acids. Generally, any known ethylenically unsaturated carboxylic acid or mixture of ethylenically unsaturated carboxylic acids may be used. Exemplary ethylenically unsaturated carboxylic acids include acrylic acid, methacrylic acid, itaconic acid, maleic acid, fumaric acid, and β-carboxyethylacrylate. In some embodiments, the ethylenically unsaturated carboxylic acid may be selected from the group consisting of acrylic acid, methacrylic acid, and combinations thereof. Other suitable acidic monomers include, e.g. isomeric vinyl benzoic acids and unsaturated sulfonic or phosphonic acids. Suitable monomers may also contain latent or protected acid moieties. Said acid groups may be activated after polymerization of the monomers by removal of the protecting groups by appropriate reagents.

In some embodiments, the monomer mixture used to prepare at least one of the acrylic polymers comprises at least 80 weight percent (wt.%) e.g., at least 85 wt.%, at least 90 wt.% or even at least 97 wt. % of the one or more alkyl (meth)acrylate monomers. In some embodiments, the monomer mixture comprises no greater than 20 wt. %, e.g., no greater than 15 wt.%, no greater than 10 wt. %, or even no greater than 3 wt.% of the ethylenically unsaturated carboxylic acid monomers. In some embodiments, the monomer mixture used to prepare at least one of the acrylic polymers comprises 2 to 20 wt.%, for example 3 to 20 wt.%, 3 to 15 wt.%, or even 3 to 10 wt.% of the ethylenically unsaturated carboxylic acid monomers.

In some embodiments, one acid functional polymer may be mixed with a moiety that results in formation of an ionic crosslink. In some embodiments, two or more acid functional polymers may be blended and mixed with a crosslinking moiety. In some embodiments, the ratio of the weight percent of carboxylic acid in the first acid functional polymer to the weight percent of carboxylic acid in the second acid functional polymer is between 1 and 7 inclusive, e.g., between 1 and 4, inclusive, between 1 and 2, inclusive. These ratios are based on the assumptions of 80 pbw of other monomers/20 pbw of acid functional monomer mixed with 97 pbw other monomers/3 pbw of acid functional monomer.

In some embodiments, the ratio of the weight percent of non-acidic monomers in the first acid functional polymer to the weight percent of non-acidic monomers in the second acid functional polymer is between 1 and 1.25, inclusive, e.g., between 1 and 1, inclusive. The overall blend ratios may range from 0 to 60 parts high acid-content polymer to 100 to 40 parts low acid content polymer. In some embodiments, at least one of the acid functional polymers may be a high molecular weight acrylic polymer. The high molecular weight acrylic copolymer has a number average molecular weight, Mn, of at least about 150,000 grams per mole (g/mol). In some embodiments, the high molecular weight acrylic copolymer has a weight average molecular weight, Mw, of at least about 450,000 g/mol.

In some embodiments, the high molecular weight acrylic copolymer has a Mn ranging from about 150,000 g/mol to about 600,000 g/mol (and/or a Mw of at least about 450,000 g/mol to about 2,000,000 g/mol). In some embodiments, the first acrylic copolymer has a Mn ranging from about 160,000 g/mol to about 350,000 g/mol (and/or a Mw of at least about 480,000 g/mol to about 1,000,000 g/mol) and in some embodiments, a Mn from about 170,000 g/mol to about 300,000 g/mol (and/or a Mw of at least about 500,000 g/mol to about 900,000 g/mol).

In some embodiments, at least one of the acrylic polymers may be a low molecular weight acrylic polymer. In some embodiments, the low molecular weight acrylic copolymer has a number average molecular weight, Mn, of less than about 70,000 g/mol. In some embodiments, the low molecular weight acrylic copolymer has weight average molecular weight, Mw, of less than about 100,000 g/mol. In some embodiments, the low molecular weight acrylic copolymer has a number average molecular weight, Mn ranging from about 10,000 g/mol to about 70,000 g/mol (and/or a Mw from about 14,000 g/mol to about 100,000 g/mol). In some embodiments, the low molecular weight acrylic copolymer has a number average molecular weight, Mn, ranging from about 15,000 g/mol to about 60,000 g/mol and/or a Mw from about 20,000 g/mol to about 84,000 g/mol), and, in some embodiments, a Mn of from about 20,000 g/mol to about 55,000 g/mol (and/or a Mw of from about 28,000 g/mol to about 77,000 g/mol). The low molecular weight acrylic copolymer maybe present in an amount that varies depending on the desired properties of the resulting composition.

In some embodiments, the overall blend ratios may range from 100 to 40 parts high molecular weight polymer to 0 to 60 parts low molecular weight polymer. The presently disclosed polymers are processed using hot melt methods. Desirably, the presently disclosed polymers are viscoelastic, pressure sensitive adhesive polymers.

In some of the embodiments of the presently disclosed thermally reversible admixtures, microspheres are incorporated into the presently disclosed polymers. Generally any known microspheres may be used. In some embodiments, rigid non-polymeric microspheres may be used including, e.g., hollow glass microspheres. Suitable glass microspheres include those available from 3M Company (e.g., available under the trade designation "3M K-series" (e.g., K15, K20, K25, and K37), "3M S-series" (e.g., S15, S22, and S38). In some embodiments, the microspheres may be modified by surface treatments, such as coupling agents and the like.

In some embodiments, polymeric microspheres may be used, including expanded and thermally-expandable polymeric microspheres. Exemplary polymeric microspheres include those available from Akzo Nobel under the trade designation "EXPANCEL", and those available from Matsumoto Yushi-Seivaku Company under the trade designation "MICROPEARL". In some embodiments, the microspheres may be added in an unexpanded or partially expanded state. In subsequent steps, such as the thermoforming step, such microspheres can be further expanded to aid in filling gaps, wetting out the surface, include surface irregularities such as roughness.

In some embodiments, the presently disclosed admixture includes from 2 to 50 weight percent microspheres. In some embodiments, the presently disclosed admixture includes at least 1.5 percent by weight of microspheres.

The presently disclosed thermally reversible admixture includes an ionic crosslinker. Generally, any known ionic crosslinkers compatible with melt processing methods may be used. In some embodiments, the type and amount of ionic crosslinker is selected such that the thermally reversible admixture retains pressure sensitive adhesive properties at ambient conditions. In some embodiments, the type and amount of ionic crosslinker is selected such that the thermally reversible admixture is a rigid, non pressure sensitive composite at ambient conditions. In some embodiments, the ionic crosslinker is a basic polymer. The basic polymer is derived from at least one basic monomer. Preferred basic monomers are non-nucleophilic amine-functional monomers, such as those of Formula (I): 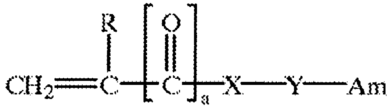 wherein
a is 0 or 1;
R is selected from H- and CH3-;
X is selected from -O- and -NH-;
Y is a divalent linking group, preferably comprising about 1 to about 5 carbon atoms for ease of availability; and

Am is a tertiary amine fragment, such as the group: 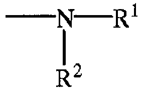 wherein R¹ and R² are selected from alkyl, aryl, cycloalkyl, and arenyl groups. R¹ and R² in the above group may also form a heterocycle. Alternatively, Am can be pyridinyl or imidazolyl, substituted or unsubstituted. In all embodiments, Y, R¹ and R² may also comprise heteroatoms, such as O, S, N, etc.

Exemplary basic monomers include N,N-dimethylaminopropyl methacrylamide (DMAPMAm); N,N-diethylaminopropyl methacrylamide (DEAPMAm); N,N-dimethylaminoethyl acrylate (DMAEA); N,N-diethylaminoethyl acrylate (DEAEA); N,N-dimethylaminopropyl acrylate (DMAPA); N,N-diethylaminopropyl acrylate (DEAPA); N,N-dimethylaminoethyl methacrylate (DMAEMA); N,N-diethylaminoethyl methacrylate (DEAEMA); N,N-dimethylaminoethyl acrylamide (DMAEAm); N,N-dimethylaminoethyl methacrylamide (DMAEMAm); N,N-diethylaminoethyl acrylamide (DEAEAm); N,N-diethylaminoethyl methacrylamide (DEAEMAm); N,N-dimethylaminoethyl vinyl ether (DMAEVE); N,N-diethylaminoethyl vinyl ether (DEAEVE); and mixtures thereof. Other useful basic monomers include vinylpyridine, vinylimidazole, tertiary amino-functionalized styrene (e.g., 4-(N,N-dimethylamino)-styrene (DMAS), 4-(N,N-diethylamino)-styrene (DEAS)), and mixtures thereof.

Preferably, the basic polymer is a copolymer derived from at least one basic monomer and at least one non-basic copolymerizable monomer. In some embodiments, such basic copolymers have hot-melt adhesive properties (e.g., pressure-sensitive hot-melt adhesive properties or heat-activatable hot-melt adhesive properties). Other monomers can be copolymerized with the basic monomers (e.g., acidic monomers, vinyl monomers, and (meth)acrylate monomers), as long as the basic copolymer retains its basicity (i.e., it can still be titrated with an acid). Most preferably, however, the copolymerizable monomers are essentially free of acidic monomers (i.e., the copolymerizable monomers include about 5 wt. % or less of acidic monomers, but most preferably, the copolymerizable monomers are free of acidic monomers).

Preferably, the basic copolymer is a basic (meth)acrylate copolymer. In this embodiment, the basic (meth)acrylate copolymer is derived from at least one monomer of Formula I.

In some embodiments, the ionic crosslinker is a basic reactive moiety. Suitable basic reactive moieties include aziridine crosslinking agents as described in U.S. Pat. No. 7,652,103, which is incorporated herein by reference in its entirety. Exemplary aziridine crosslinking agents include substituted aziridines.

The presently disclosed thermally formable admixture can also comprise additives known to those of skill in the art, such as mineral fillers, amorphous or crystalline thermoplastics, and flow control agents. Flow control agents include, for example, fumed silica. Amorphous or crystalline thermoplastics included, for example, polyesters, polycarbonate, polypropylene, acrylic block copolymers, and metallocene polyethylenes.

The presently disclosed thermally formable admixture can undergo additional permanent crosslinking by UV (with prior addition of photoinitiator(s)) or by electron beam radiation. These crosslinking methods do not generally affect the functional groups which participate in ionic crosslinking. The radiation dosage and profile may be independently varied to increase static shear resistance and limit the short range flow of the polymer under certain conditions of heat and pressure while still maintaining large-scale thermoformability of the foam tape or composite via the softening of the ionic crosslinks at elevated temperatures.

The presently disclosed thermally formable admixture is useful in a variety of applications, such as for example, formable composites. Formable composites include materials such as pressure sensitive adhesive tapes and specifically pressure adhesive foam tapes. These formable composites include a first skin layer bonded to a core material where the core material includes any of the previously disclosed thermally formable admixtures. In some embodiments, the formable composite also includes a second skin layer bonded to the core material, where the first and second skin layers are separated by the core material or the first skin layer and the second skin layer have the core material therebetween. In some embodiments, the first skin layer comprises a metal. In some embodiments, the first skin layer comprises a thermoplastic polymer.

The presently disclosed formable composite can be used to create a formed composite. In some embodiments, the formed composite is cold formed. In some embodiments, the formed composite is thermoformed.

Following are various embodiments and combinations of embodiments for the present disclosure:
1. A thermally reversible admixture comprising
   (a) an ionically crosslinked polymer matrix comprising
      at least one (meth)acrylic polymer,
      a first mole fraction of an acid functional polymer,
      a second mole fraction of a moiety capable of forming an ionic crosslink with the acid functional polymer,
      wherein the first mole fraction and the second mole fraction are based on the total number of moles of repeat units in the polymer matrix; and
   (b) 2 to 50 weight percent microspheres.
2. The admixture of embodiment 1, wherein the at least one (meth)acrylic polymer comprises a first (meth)acrylic polymer derived from the acid functional polymer and the moiety capable of forming an ionic crosslink with the acid functional polymer.
3. The admixture of embodiment 1 wherein the at least one (meth)acrylic polymer comprises a first (meth)acrylic polymer comprising the acid functional polymer and a second polymer comprising the moiety capable of forming an ionic crosslink with the acid functional polymer.
4. The admixture of embodiment 3, wherein the second polymer is an (meth)acrylic polymer.
5. The admixture of embodiments 3 or 4, wherein the moiety capable of forming an ionic crosslink with the acid functional polymer is selected from the group consisting of polymers derived from non-nucleophilic amine-functional monomers.
6. The admixture of embodiment 2, wherein the reactive monomer is selected from the group consisting of substituted aziridines.
7. The admixture of any of the preceding embodiments, wherein the acidic functional monomer is selected from the group consisting of ethylenically unsaturated carboxylic acids.
8. The admixture of any of the preceding embodiments, wherein the acidic functional polymer comprises a mixture of (meth)acrylic acid monomers and (meth)acrylic ester monomers.
9. The admixture according to embodiment 8, wherein the (meth)acrylic ester monomers are alkyl(meth)acrylates having 2 to 14 carbon atoms in the alkyl group.
10. The admixture according to any one of the preceding embodiments comprising at least 1.5 percent by weight of the microspheres.
11. The admixture according to any one of the preceding embodiments, wherein the microspheres are glass microspheres.
12. The admixture according to any of embodiments 1 through 9, where in the microspheres are expandable polymeric microspheres.
13. The admixture according to any one of the preceding embodiments further comprising at least a portion of the crosslinked polymer matrix having permanent crosslinks.
14. A formable composite comprising a first skin layer bonded to a core material comprising the admixture according to any one of the preceding embodiments.
15. The formable composite of embodiment 14, further comprising a second skin layer bonded to the core material, wherein the first and second skin layers are separated by the core material.
16. The formable composite of embodiment 14 or 15, wherein the first skin layer comprises a metal.
17. The formable composite of embodiment 14 or 15, wherein the first skin layer comprises a thermoplastic polymer.
18. A formed composite comprising the formable composite according to any one of embodiments 14 to 17.
19. The formed composite of embodiment 18, wherein the formed composite is cold formed.
20. The formed composite of embodiment 18, wherein the formed composite is thermoformed.

### Examples

**Table 1:**

| I.D. | Description | Source |
|---|---|---|
| 2-EHA | 2-ethylhexyl acrylate | commonly available |
| IOA | isooctyl acrylate | commonly available |
| AA | acrylic acid | commonly available |
| EVA | ethylene vinyl acetate | commonly available |
| IOTG | isooctylthioglycolate (chain transfer agent) | commonly available |
| GB-K37 | K37/2000 glass bubbles | 3M Company |
| | | St. Paul, Minnesota |
| IC-A | IOA-aziridine liquid ionic crosslinker | Compound IV as described in U.S. Patent No. 7,652,103 |
| IC-B | EUDRAGIT E100 ionic crosslinker (DMAEMA/PMMA copolymer) | Rohm GmbH & Co. Darmstadt, Germany |

The IC-A ionic crosslinker was prepared from IOA and 2-methylaziridine and corresponds to Compound IV in Table 1 of U.S. Patent No. 7,652,103 ("Acrylic Pressure-Sensitive Adhesives with Aziridine Crosslinking Agents," Kavanagh, et. al., issued January 26, 2010).

Substantially planar foam sheets were prepared by combining one or more acrylic copolymers, microspheres, and an ionic crosslinker in a BRABENDER mixer. The mixer was equipped to monitor the motor torque during mixing. The motor torque was used as an indirect indication of the viscosity of the samples as they were prepared, with an increase in torque indicating an increase in viscosity.

Example 1 (EX-1) was prepared from 35.0 grams (g) of an EVA-pouched 95/5 copolymer of 2-EHA and AA (i.e., 95 wt.% 2-EHA and 5 wt.% AA) with 0.03 wt.% IOTG chain transfer agent prepared according to the method described in Example 1 of U.S. Pat. No. 5,804,610. The acrylic adhesive composition was heated to 125 °C and 10.0 g of the GB-K37 glass microspheres were added. After the microspheres were thoroughly mixed with the acrylic adhesive, 0.40 g of IC-A ionic crosslinker was added. Upon addition of the ionic crosslinker, the motor torque increased, indicating development of an ionic association of the polymer chains through rapid reaction of the aziridine moiety of the IC-A with a portion of the available polymer-bound acrylic acid groups. The secondary amine moieties thus generated formed additional ionic linkages with other polymer bound acid groups. After the measured motor torque reached a steady value, the compounded, ionically-crosslinked adhesive composition was removed from the mixer, and successive portions of the mixture were pressed between two sheets of 0.05mm (2.0mil) thick PTFE in a CARVER hydraulic press operating at 200 °C and shimmed to a gap of approximately 1 mm to prepare multiple samples of the composition. The resulting 0.8 mm (approximately 30 mil) thick foam sheets were identified as EX-1 and retained for subsequent thermoforming experiments. The composition by weight of the sheets (based on the input materials) was acrylate resin, 77.1 %, glass bubbles, 22.0%, and crosslinker, 0.88%.

Example EX-2 was prepared according to the procedure of Example EX-1 using 45 g of the EVA-pouched 95/5 copolymer of 2-EHA and AA, 5 g of the GB-K37 microspheres, and 0.6 g of the IC-A ionic crosslinker. The composition by weight of the sheets (based on the input material) was acrylate resin, 88.9%, glass bubbles, 9.88%, and crosslinker, 1.19%.

Example EX-3 was prepared according to the procedure of Example EX-1 using 49 g of the EVA-pouched 95/5 copolymer of 2-EHA and AA and 0.6 g of the IC-A ionic crosslinker. In addition, the glass microspheres were replaced with 1.5 g of expandable thermoplastic microspheres. When the compounded, ionically-crosslinked adhesive composition pressed in the hydraulic press, the microspheres expanded producing 0.8 mm (30 mil) thick, low density foam sheets containing expanded microspheres.

Example EX-4 was prepared according to the procedure of Example EX-1, except for replacing the EVA-pouched 95/5 adhesive with 50 g of an EVA-pouched, 90/10 2-EHA/AA copolymer containing 0.03 wt.% IOTG chain transfer agent. Upon the addition of 0.35 g of the IC-A ionic crosslinker, rapid ionic crosslinking occurred as indicated by an increase in the motor torque. The result of this experiment, wherein glass bubbles were not used, was a tough, clear, rubbery polymer sheet of approximately 0.10 mm thickness obtained by pressing bulk material as described above, with the press shimmed to approximately 0.20 mm (8 mils).

Example EX-5 was prepared according to the procedures of Example EX-1 using 35.0 g of the 90/10 acrylic copolymer and 10.0 g of GB-K37 microspheres. The ionic crosslinker IC-A was replaced with 1.6 g of the IC-B ionic crosslinker. Addition of the polymeric ionic crosslinker resulted in an immediate increase in the measured motor torque. Thermally-reversible ionic crosslinking was demonstrated by a steep drop in motor torque (material viscosity) as the temperature was increased above 140 °C. The compounded, ionically-crosslinked adhesive composition was removed from the mixer and a portion was pressed between two sheets of 0.05mm (2.0mil) thick PTFE in a CARVER hydraulic press operating at 200 °C and shimmed to a gap of approximately 1 mm. The resulting 0.8 mm (approximately 30 mil) thick foam sheets were identified as EX-5 and retained for subsequent thermoforming experiments. The composition by weight of the sheet (based on the input material) was acrylate resin, 75.1%, glass bubbles, 17.7%, and crosslinker, 2.82%.

Example EX-6 was identical to EX-5 except the 90/10 acrylic copolymer was replaced with the 95/5 acrylic copolymer used in Example EX-1. The composition by weight of the pressed sheet (based on the input material) was acrylate resin, 75.1%, glass bubbles, 17.7%, and crosslinker, 2.82%.

Example EX-7 was prepared according to the procedure of Example EX-1 using 35.0 g of the EVA-pouched 95/5 copolymer of 2-EHA and AA, 10.0 g of the GB-K37 microspheres, and 2.8 g of the IC-B ionic crosslinker. The composition by weight of the sheets (based on the input material) was acrylate resin, 73.2%, glass bubbles, 20.9%, and crosslinker, 5.86%.

**Table 2:**

| Ex. | acrylic | | microspheres | | Ionic crosslinker | |
|---|---|---|---|---|---|---|
| | 2-EHA/AA | g | type | g | type | G |
| EX-1 | 95/5 | 35.0 | GB-K37 | 10.0 | IC-A | 0.4 |
| EX-2 | 95/5 | 45 | GB-K37 | 5.0 | IC-A | 0.6 |
| EX-3 | 95/5 | 49 | F100D EMS | 1.5 | IC-A | 0.6 |
| EX-4 | 90/10 | 50 | NA | | IC-A | 0.35 |
| EX-5 | 90/10 | 35.0 | GB-K37 | 10.0 | IC-B | 1.6 |
| EX-6 | 95/5 | 35.0 | GB-K37 | 10.0 | IC-B | 1.6 |
| EX-7 | 95/5 | 35.0 | GB-K37 | 10.0 | IC-B | 2.8 |

Multiple pressed samples of EX-1, EX-5, and EX-6 were prepared and a subset of these samples wash and-laminated to a PSA film (AR-7 acrylic adhesive, 3M Company), on one or both sides.

### Thermoforming Experiments.

Various foam tape samples were hand-laminated to a 325 mm x 275 mm x 0.5 mm thick flat polypropylene film substrate pre-treated with an acrylamide-based primer on one side to improve adhesion of the foam sample. The resulting foam/film laminates were thermoformed over a positive mold in the form of an aluminum metal block 76 mm wide, 14 mm long, and 20 mm deep. The foam side of the laminate was against the mold surface, protected by a siliconized polyethylene film liner during the thermoforming step. Thermoforming was conducted using a pressure/vacuum thermoformer (Model 2024, produced by Labform Hydro-Trim Corporation, W. Nyack, NY).

The experimental thermoforming conditions were first established by using the polypropylene sheet alone (i.e., no foam layer) and subsequently modified slightly to compensate for the insulating characteristics of the experimental foams. The reference example (bare polypropylene) was thermoformed at 190 °C for 30 seconds. The top pressure was 0.655 megapascals (6.55 bar) and the bottom vacuum was 0.088 megapascals (659 torr). The film/foam laminates were able to be thermoformed at 204 °C for 40 seconds with the liner-protected foam side against the block mold. A comparative example using a 1.1 mm thick, commercially available acrylic foam tape (5344 acrylic foam tape from 3M Company) was also thermoformed at 204 °C for 40 seconds. The results are summarized in Table 3.

**Table 3:**

| Thermoforming Experiment | Foam Core Example | Crosslinker | Added Adhesive/Configuration | Comment |
|---|---|---|---|---|
| 1 | PP Film | NA | NA | Good Resolution |
| 2 | 5344 Tape | NA | NA | Poor Resolution |
| 3 | EX-1 | IC-A | None (Self-Stick Foam) | Good Resolution |
| 4 | EX-6 | IC-B | None (Self-Stick Foam) | Good Resolution |
| 5 | EX-6 | IC-B | AR-7 One Side (Mold Side) | Good Resolution |
| 6 | EX-7 | IC-B | AR-7 One Side (Mold Side) | Good Resolution |
| 7 | EX-5 | IC-B | AR-7 One Side (Mold Side) | Good Resolution |

Although good results were obtained using a single acrylic polymer, the present inventors further discovered that blends of high and low molecular weight acrylic polymers offered additional advantages that may be preferred for some applications. For example, in some embodiments, higher volume loadings of glass bubbles could be obtained than when a single, high molecular weight acrylate polymer was used. In addition, the melt flow characteristics of polymer blends can be tailored to fit a processing window by using the blending strategy.

Various modifications and alterations of this invention will become apparent to those skilled in the art without departing from the scope and spirit of this invention.

## Claims

1. A thermally reversible admixture comprising
(a) an ionically crosslinked polymer matrix comprising
at least one (meth)acrylic polymer,
a first mole fraction of an acid functional polymer,
a second mole fraction of a moiety capable of forming an ionic crosslink with the acid functional polymer,
wherein the first mole fraction and the second mole fraction are based on the total number of moles of repeat units in the polymer matrix; and
(b) 2 to 50 weight percent microspheres.

2. The admixture of claim 1, wherein the at least one (meth)acrylic polymer comprises a first (meth)acrylic polymer derived from the acid functional polymer and the moiety capable of forming an ionic crosslink with the acid functional polymer.

3. The admixture of claim 1, wherein the at least one (meth)acrylic polymer comprises a first (meth)acrylic polymer comprising the acid functional polymer and a second polymer comprising the moiety capable of forming an ionic crosslink with the acid functional polymer.

4. The admixture of claim 3, wherein the second polymer is an (meth)acrylic polymer.

5. The admixture of claims 3 or 4, wherein the moiety capable of forming an ionic crosslink with the acid functional polymer is selected from the group consisting of polymers derived from non-nucleophilic amine-functional monomers.

6. The admixture of claim 2, wherein the reactive monomer is selected from the group consisting of substituted aziridines.

7. The admixture of any of the preceding claims, wherein the acidic functional monomer is selected from the group consisting of ethylenically unsaturated carboxylic acids.

8. The admixture of any of the preceding claims, wherein the acidic functional polymer comprises a mixture of (meth)acrylic acid monomers and (meth)acrylic ester monomers.

9. The admixture according to claim 8, wherein the (meth)acrylic ester monomers are alkyl(meth)acrylates having 2 to 14 carbon atoms in the alkyl group.

10. The admixture according to any one of the preceding claims comprising at least 1.5 percent by weight of the microspheres.

11. The admixture according to any one of the preceding claims, wherein the microspheres are glass microspheres.

12. The admixture according to any of claims 1 through 9, where in the microspheres are expandable polymeric microspheres.

13. The admixture according to any one of the preceding claims further comprising at least a portion of the crosslinked polymer matrix having permanent crosslinks.

14. A formable composite comprising a first skin layer bonded to a core material comprising the admixture according to any one of the preceding claims.

15. A formed composite comprising the formable composite according to any one of claims 14.

## Patentansprüche

1. Thermisch umkehrbares Zusatzmittel, umfassend:
(a) eine ionisch quervernetzte Polymermatrix, umfassend
wenigstens ein (Meth)acrylpolymer,
eine erste Molfraktion eines säurefunktionellen Polymers,
eine zweite Molfraktion eines Teils, der in der Lage ist, eine ionische Quervernetzung mit dem säurefunktionellen Polymer zu bilden,
wobei die erste Molfraktion und die zweite Molfraktion auf der Gesamtanzahl von Molen der Wiederholungseinheiten in der Polymermatrix basieren; und
(b) 2 bis 50 Gew.-% Mikrosphären.

2. Zusatzmittel nach Anspruch 1, wobei das wenigstens eine (Meth)acrylpolymer ein erstes (Meth)acrylpolymer umfasst, das von dem säurefunktionellen Polymer stammt, und den Teil, der in der Lage ist, eine ionische Quervernetzung mit dem säurefunktionellen Polymer zu bilden.

3. Zusatzmittel nach Anspruch 1, wobei das wenigstens eine (Meth)acrylpolymer ein erstes (Meth)acrylpolymer umfasst, welches das säurefunktionelle Polymer und ein zweites Polymer umfasst, welches den Teil umfasst, der in der Lage ist, eine ionische Quervernetzung mit dem säurefunktionellen Polymer zu bilden.

4. Zusatzmittel nach Anspruch 3, wobei das zweite Polymer ein (Meth)acrylpolymer ist.

5. Zusatzmittel nach den Ansprüchen 3 oder 4, wobei der Teil, der in der Lage ist, eine ionische Quervernetzung mit dem säurefunktionellen Polymer zu bilden, ausgewählt ist aus der Gruppe bestehend aus Polymeren, die von nicht-nukleophilen aminfunktionellen Monomeren abstammen.

6. Zusatzmittel nach Anspruch 2, wobei das reaktive Monomer ausgewählt ist aus der Gruppe bestehend aus substituierten Aziridinen.

7. Zusatzmittel nach einem der vorstehenden Ansprüche, wobei das säurefunktionelle Monomer ausgewählt ist aus der Gruppe bestehend aus ethylenisch ungesättigten Carboxylsäuren.

8. Zusatzmittel nach einem der vorstehenden Ansprüche, wobei das säurefunktionelle Polymer eine Mischung aus (Meth)acrylsäuremonomeren und (Meth)acrylestermonomeren umfasst.

9. Zusatzmittel nach Anspruch 8, wobei die (Meth)acrylestermonomere Alkyl-(meth)acrylate sind, die 2 bis 14 Kohlenstoffatome in der Alkylgruppe aufweisen.

10. Zusatzmittel nach einem der vorstehenden Ansprüche umfassend wenigstens 1,5 Gew.-% der Mikrosphären.

11. Zusatzmittel nach einem der vorstehenden Ansprüche, wobei die Mikrosphären Glasmikrosphären sind.

12. Zusatzmittel nach einem der Ansprüche 1 bis 9, wobei die Mikrosphären expandierbare Polymermikrosphären sind.

13. Zusatzmittel nach einem der vorstehenden Ansprüche, ferner umfassend wenigstens einen Teil der quervernetzten Polymermatrix, der permanente Quervernetzungen aufweist.

14. Formbares Komposit umfassend eine erste Hautschicht, die mit einem Kernmaterial verbunden ist, welches das Zusatzmittel nach einem der vorstehenden Ansprüche umfasst.

15. Geformtes Komposit, umfassend das formbare Komposit nach einem der Ansprüche 14.

## Revendications

1. Mélange thermiquement réversible comprenant
(a) une matrice polymère ioniquement réticulée comprenant
au moins un polymère (méth)acrylique,
une première fraction molaire d'un polymère à fonction acide,
une deuxième fraction molaire d'un fragment susceptible de former une réticulation ionique avec le polymère à fonction acide,
dans lequel la première fraction molaire et la deuxième fraction molaire sont basées sur le nombre total de moles de motifs répétés dans la matrice polymère ; et
(b) 2 à 50 pour cent en poids de microsphères.

2. Mélange selon la revendication 1, dans lequel l'au moins un polymère (méth)acrylique comprend un premier polymère (méth)acrylique dérivé du polymère à fonction acide et le fragment susceptible de former une réticulation ionique avec le polymère à fonction acide.

3. Mélange selon la revendication 1, dans lequel l'au moins un polymère (méth)acrylique comprend un premier polymère (méth)acrylique comprenant le polymère à fonction acide et un deuxième polymère comprenant le fragment susceptible de former une réticulation ionique avec le polymère à fonction acide.

4. Mélange selon la revendication 3, dans lequel le deuxième polymère est un polymère (méth)acrylique.

5. Mélange selon les revendications 3 ou 4, dans lequel le fragment susceptible de former une réticulation ionique avec le polymère à fonction acide est choisi dans le groupe constitué de polymères dérivés de monomères à fonction amine non nucléophiles.

6. Mélange selon la revendication 2, dans lequel le monomère réactif est choisi dans le groupe constitué d'aziridines substituées.

7. Mélange selon l'une quelconque des revendications précédentes, dans lequel le monomère à fonction acide est choisi dans le groupe constitué d'acides carboxyliques à insaturation éthylénique.

8. Mélange selon l'une quelconque des revendications précédentes, dans lequel le polymère à fonction acide comprend un mélange de monomères d'acide (méth)acrylique et de monomères d'ester (méth)acrylique.

9. Mélange selon la revendication 8, dans lequel les monomères d'ester (méth)acrylique sont des (méth)acrylates d'alkyle possédant 2 à 14 atomes de carbone dans le groupe alkyle.

10. Mélange selon l'une quelconque des revendications précédentes, comprenant au moins 1,5 pour cent en poids des microsphères.

11. Mélange selon l'une quelconque des revendications précédentes, dans lequel les microsphères sont des microsphères de verre.

12. Mélange selon l'une quelconque des revendications 1 à 9, dans lequel les microsphères sont des microsphères polymères expansibles.

13. Mélange selon l'une quelconque des revendications précédentes, comprenant en outre au moins une partie de la matrice polymère réticulée possédant des réticulations permanentes.

14. Composite formable comprenant une première couche superficielle liée à un matériau d'âme comprenant le mélange selon l'une quelconque des revendications précédentes.

15. Composite formé comprenant le composite formable selon l'une quelconque des revendications 14.
